# EUROPÄISCHE PATENTANMELDUNG

(11) **EP 3 115 829 A1**
(43) Veröffentlichungstag der Anmeldung: **11.01.2017**
(21) Anmeldenummer: 16178462.4
(22) Anmeldetag: 07.07.2016
(51) Int. Cl.: G02C 5/00, B29D 12/02

(54) **GESTELL FÜR EINE BRILLE ODER EIN MONOKEL ODER EIN LORGNON**

(30) Priorität: 10.07.2015 DE 102015111246
(71) Anmelder: Hoizbruin GmbH, 94377 Steinach (DE)
(72) Erfinder: Fischer, Karl, 94377 Steinach (DE)
(74) Vertreter: Hafner & Kohl

(57) **Zusammenfassung**

Die Erfindung betrifft ein Gestell (1) für eine Brille (2) oder ein Monokel (9) oder ein Lorgnon (10), umfassend wenigstens ein Gestellelement (3), wobei das wenigstens eine Gestellelement (3) zumindest abschnittsweise aus wenigstens einem mineralischen Kompositmaterial, umfassend wenigstens eine mineralische Materialkomponente und wenigstens eine, insbesondere harzartige, organische Materialkomponente gebildet ist oder wenigstens ein solches mineralisches Kompositmaterial umfasst.

## Beschreibung

Die Erfindung betrifft ein Gestell für eine Brille oder ein Monokel oder ein Lorgnon, umfassend wenigstens ein Gestellelement.

Gestelle für Brillen oder Monokel oder Lorgnons sind an und für sich bekannt. Entsprechende Gestelle umfassen, je nachdem, ob sie z. B. für eine Brille (Binokel), für ein Monokel oder ein Lorgnon vorgesehen sind, ein oder mehrere Gestellelemente, d. h. z. B. Gestellelementgrundkörper mit Aufnahmemöglichkeiten für optische Elemente, wie z. B. Brillen-, Monokel- oder Lorgnongläser, und/oder Gestellbügel.

Entsprechende Gestelle bzw. Gestellelemente sind bisher aus Materialien gebildet, die im Hinblick auf unterschiedliche Aspekte, d. h. z. B. im Hinblick auf die Anpassungsmöglichkeiten entsprechender Gestelle bzw. Gestellelemente an individuelle anatomische Gegebenheiten, typischerweise die Kopfform, unterschiedlicher Träger, verbesserungswürdig sind. Verbesserungswürdig können entsprechende Gestelle bzw. Gestellelemente auch im Hinblick auf ihre Hautverträglichkeit sein.

Der Erfindung liegt die Aufgabe zugrunde, ein demgegenüber verbessertes Gestell für eine Brille oder ein Monokel oder Lorgnon anzugeben.

Die Aufgabe wird durch ein Gestell gemäß Anspruch 1 gelöst. Die abhängigen Ansprüche betreffen vorteilhafte Ausführungsform des Gestells. Die Ansprüche 15 bis 17 betreffen eine Brille bzw. ein Monokel bzw. ein Lorgnon mit einem entsprechenden Gestell.

Das hierin beschriebene Gestell ist insbesondere für eine Brille (Binokel) oder ein Monokel vorgesehen. Das Gestell kann deshalb auch als Brillengestell oder Monokelgestell bezeichnet bzw. erachtet werden. Denkbar ist auch eine Vorsehung des Gestells für ein so genanntes Lorgnon. Das Gestell kann in diesem Fall auch als Lorgnongestell bezeichnet bzw. erachtet werden.

Das Gestell umfasst ein oder mehrere Gestellelemente. Die konkrete Anzahl und geometrisch-konstruktive Ausgestaltung des Gestellelements bzw. der Gestellelemente sind im Wesentlichen durch die Gesamtkonstruktion des Gestells, d. h. danach, ob es sich um ein Gestell z. B. für eine Brille (Brillengestell) oder um ein Gestell für ein Monokel oder um ein Gestell für ein Lorgnon handelt, bestimmt.

Bei einem entsprechenden Gestellelement kann es sich z. B. um einen Gestellgrundkörper mit entsprechenden Aufnahmen für optische Elemente, d. h. insbesondere Brillen-, Monokel- oder Lorgnongläser, handeln. Gestellgrundkörper für ein Brillengestell weisen typischerweise mehrere Aufnahmen für jeweils ein optisches Element, insbesondere ein Brillenglas, auf. Gleiches gilt für Gestellgrundkörper für ein Lorgnongestell. Gestellgrundkörper für ein Monokelgestell weisen typischerweise eine (einzige) Aufnahme für ein (einziges) optisches Element, insbesondere ein Monokelglas, auf.

Bei einem entsprechenden Gestellelement kann es sich auch um einen an einem entsprechenden Gestellgrundkörper mit wenigstens einer Aufnahme für ein optisches Element, insbesondere ein Brillenglas, angeordneten oder ausgebildeten Gestellbügel oder - im Falle eines Lorgnons - Gestellgriff handeln. Ein entsprechender Gestellbügel bzw. ein entsprechender Gestellgriff kann einstückig mit einem entsprechenden Gestellgrundkörper ausgebildet sein oder als separates Bauteil unmittelbar oder mittelbar (unter Zwischenschaltung wenigstens eines Bauteils. bzw. wenigstens einer Bauteilgruppe) an einem Gestellgrundkörper angeordnet sein. Ein an einem Gestellgrundkörper angeordneter Gestellbügel ist typischerweise beweglich, insbesondere schwenkbeweglich, relativ zu dem Gestellgrundkörper an dem Gestellgrundkörper befestigt angeordnet. Zur Realisierung entsprechender Bewegungen, insbesondere Schwenkbewegungen, können scharnierartige Einrichtungen, wie z. B. Schwenkscharniereinrichtungen, vorgesehen sein. Entsprechende Einrichtungen sind typischerweise zwischen dem Gestellbügel und dem Gestellgrundkörper angeordnet oder ausgebildet und einerseits mit dem Gestellgrundkörper und andererseits mit dem Gestellbügel verbunden.

Sowohl für einen entsprechenden Gestellgrundkörper mit wenigstens einer Aufnahme für ein optisches Element, insbesondere ein Brillenglas, als auch für einen entsprechenden Gestellbügel bzw. einen entsprechenden Gestellgriff gilt, dass diese(r) mehrteilig, d. h. aus wenigstens zwei Gestellelementabschnitten (Gestellgrundkörperteilen bzw. Gestellbügelteilen bzw. Gestellgriffteilen), gebildet sein kann. Entsprechende Gestellelementabschnitte können mit magnetischen bzw. magnetisierbaren Magnetelementen ausgestattet sein, sodass diese grundsätzlich voneinander lösbar, jedoch aufgrund magnetischer Wechselwirkung bzw. Anziehung wieder miteinander verbindbar bzw. verbunden sind. Entsprechende Gestellelementabschnitte können gelenkig, d. h. durch Zusammenwirken jeweiliger gestellelementabschnittseitiger Gelenkelemente, miteinander verbunden sein, sodass ein entsprechendes Gestellelement sich z. B. Zusammenfalten bzw. Zusammenklappen lässt.

Das wenigstens eine Gestellelement oder, für den Fall mehrerer Gestellelemente, wenigstens ein Gestellelement ist zumindest abschnittsweise, d. h. gegebenenfalls auch vollständig, aus einem besonderen Material gebildet oder umfasst (neben anderen Materialien) wenigstens ein solches besonderes Material, welches, wie sich im Weiteren noch ergibt, insbesondere der im Zusammenhang mit dem eingangs beschriebenen Stand der Technik genannten Problematik einer verbesserten Anpassungsmöglichkeit bzw. einer verbesserten Hautverträglichkeit entsprechender Gestelle bzw. Gestellelemente an individuelle anatomische Gegebenheiten, typischerweise die Kopfform, unterschiedlicher Träger, Rechnung trägt.

Bei dem das wenigstens eine Gestellelement zumindest abschnittsweise bildenden oder von diesem umfassten Material handelt es sich um ein mineralisches Kompositmaterial. Das mineralische Kompositmaterial (im Weiteren abgekürzt als Kompositmaterial bezeichnet) besteht (im Wesentlichen) aus zwei unterschiedlichen Materialkomponenten. Eine erste Materialkomponente ist eine mineralische Materialkomponente. Eine zweite Materialkomponente ist eine, insbesondere harzartige, organische Materialkomponente. Die, typischerweise durch ein Kunststoffmaterial gebildete, organische Materialkomponente kann dabei eine Art Matrix für die in diesem Fall als Füllmaterial bzw. Füllstoff zu bezeichnende bzw. zu erachtende mineralische Materialkomponente bilden. Die mineralische Materialkomponente kann entsprechend als bzw. im Sinne eines Füllmaterial(s) bzw. Füllstoff(s) in der eine Art Matrix bildenden organischen Materialkomponente verteilt sein.

Das Kompositmaterial weist eine gleichmäßig glatte Oberfläche auf, was neben der Anforderung einer hochwertigen optischen Anmutung auch technischen Anforderungen an eine moderne Gestellkonstruktion, insbesondere eine Brillen- oder Monokelgestellkonstruktion, genügt. Das Kompositmaterial lässt sich leicht reinigen, ist insofern pflegeleicht und somit auch unter hygienischen Gesichtspunkten als Material für ein entsprechendes Gestellelement besonders geeignet. Das Kompositmaterial ist zudem besonders hautverträglich, wodurch sich die Trageeigenschaften des Gestells verbessern.

Das Kompositmaterial ist bei geringem Gewicht mechanisch ausreichend stabil, so dass in der alltäglichen Verwendung des Gestells auftretende mechanische Beanspruchungen, z. B. ein Herabfallen des Gestells auf einen harten Untergrund, in der Regel keine Schäden an dem Gestell hinterlassen. Sollte das Gestell doch einmal beschädigt werden, besteht ein Vorteil des Kompositmaterials darin, dass sich dieses ohne weiteres reparieren lässt, sodass das Gestell nicht getauscht werden muss, sondern durch entsprechende Reparaturarbeiten auch nach einem Schaden weiter verwendet werden kann. So können z. B. Kratzer oder Risse ohne weiteres z. B. durch Ausfüllen ("Ausspachteln") entsprechender Risse mit einem entsprechenden Kompositmaterial und/oder Nachschleifen repariert werden.

In fertigungstechnischer Hinsicht ist als Vorteil des Kompositmaterials zu erwähnen, dass sich dieses mechanisch gut bearbeiten und verarbeiten lässt, was insbesondere zur Realisierung filigraner bzw. aufwändig gestalteter Gestellelemente, d. h. zur Realisierung von Gestellelementen mit vergleichsweise komplexen geometrischen Formgebungen, engen Radien, geringen Toleranzen, etc., und somit auch zur Realisierung geometrischkonstruktiver unterschiedlicher Gestellelemente, d. h. zur Realisierung von Gestellelementen mit unterschiedlichen geometrisch-konstruktiven Gestaltungen, vorteilhaft ist. Die mechanische Bearbeitung und Verarbeitung des Kompositmaterials ist mit vergleichsweise einfachem werkzeugtechnischen Aufwand, d. h. mit vergleichsweise einfachen Werkzeugen, insbesondere Hartmetallwerkzeugen, möglich.

Ein weiterer wesentlicher Vorteil des Kompositmaterials begründet sich durch die besonderen reversiblen Anpassungsmöglichkeiten an die individuell unterschiedlichen anatomischen Gegebenheiten, typischerweise die Kopfform, unterschiedlicher Träger. Die besonderen Anpassungsmöglichkeiten des Kompositmaterials resultieren aus einer thermischen Um- bzw. Verformbarkeit des Kompositmaterials. Das Kompositmaterial lässt sich somit bei hinreichendem Eintrag von thermischer Energie (Wärme) reversibel um- bzw. verformen. Somit lässt sich das Gestellelement auf einfache Weise an unterschiedliche anatomische Gegebenheiten unterschiedlicher Träger anpassen. Auf die thermische Um- bzw. Verformbarkeit des Kompositmaterials wird weiter unten nochmals näher eingegangen.

Das Kompositmaterial ist zudem in einer Vielzahl an Farben und mit einer Vielzahl an Oberflächenstrukturierungen erhältlich, was im Hinblick auf die technischen Anforderungen an eine moderne Gestellkonstruktion, insbesondere Brillen-, Monokel-oder Lorgnongestellkonstruktion, ebenso einen Vorteil darstellt.

Weitere vorteilhafte Aspekte des Kompositmaterials sind in dessen günstigem Brandverhalten sowie in dessen umweltneutralen und nicht toxischen Eigenschaften zu sehen. Letztere ermöglichen eine standardisierte Entsorgung des mineralischen Kompositmaterials.

Insgesamt ist durch die Verwendung des Kompositmaterials ein verbessertes Gestell für eine Brille oder ein Monokel oder ein Lorgnon gegeben.

Mögliche konkrete materialmäßige Zusammensetzungen des Kompositmaterials werden im Weiteren beispielhaft näher erläutert.

Die wenigstens eine mineralische Materialkomponente, allgemein wenigstens eine mineralische Materialkomponente, kann eine mineralische Hydroxidverbindung sein oder wenigstens eine mineralische Hydroxidverbindung umfassen. Bevorzugt handelt es sich bei der mineralischen Hydroxidverbindung um Aluminium(tri)hydroxid (Al(OH)₃). Aluminium(tri)hydroxid (Al(OH)₃) zeichnet sich im Hinblick auf die Verwendung als mineralische Materialkomponente des Kompositmaterials durch besondere strukturelle, insbesondere mechanische, Eigenschaften aus. Grundsätzlich können alternativ oder ergänzend auch andere mineralische Hydroxidverbindungen, insbesondere solche mit ähnlichen Eigenschaften wie Aluminium(tri)hydroxid, als mineralische Materialkomponente verwendet werden.

Die wenigstens eine organische Materialkomponente, allgemein wenigstens eine organische Materialkomponente, kann ein thermoplastisches oder duroplastisches Kunststoffmaterial sein oder wenigstens ein thermoplastisches oder duroplastisches Kunststoffmaterial umfassen. Bei dem Kunststoffmaterial kann es sich z. B. um ein (thermoplastisches) Acrylmaterial, bevorzugt Polymethylmetacrylat (PMMA), oder um ein (duroplastisches) Polyestermaterial handeln. Die Verwendung von Acrylmaterialien kann sich positiv auf die haptischen Eigenschaften des Gestellelements auswirken, da Acrylmaterialien, insbesondere Polymethylmetacrylat (PMMA), typischerweise eine weiche und berührungsfreundlich warme Oberflächenanmutung ("Warm Touch Oberfläche") bedingen. Die Verwendung von Polyestermaterialien kann sich positiv auf die mechanischen Eigenschaften des Gestellelements auswirken. Dies gilt insbesondere für duroplastische Polyestermaterialien.

Die Zusammensetzung des Kompositmaterials enthält anteilig typischerweise mehr von der mineralischen Materialkomponente als von der organischen Materialkomponente. Bevorzugt enthält die Zusammensetzung des Kompositmaterials (ca.) zwei Drittel der mineralischen Materialkomponente und (ca.) ein Drittel der organischen Materialkomponente. Eine bevorzugte Zusammensetzung des Kompositmaterials besteht sonach zu (ca.) zwei Dritteln aus der mineralischen Materialkomponente und zu (ca.) einem Drittel aus der organischen Materialkomponente. Durch diese anteilige Zusammensetzung lassen sich die weiter oben beschriebenen vorteilhaften Eigenschaften des Kompositmaterials besonders zuverlässig einstellen. Selbstverständlich können in Ausnahmefällen auch andere anteilige Zusammensetzungen vorgesehen werden.

Ein konkretes Beispiel für ein entsprechendes Kompositmaterial ist ein so genannter Mineralwerkstoff, bestehend aus (ca.) zwei Dritteln einer mineralischen Hydroxidverbindung, insbesondere Aluminium(tri)hydroxid, als mineralische Materialkomponente und (ca.) einem Drittel eines Acrylmaterials, insbesondere Polymethylmetacrylat, als organische Materialkomponente. Entsprechende Kompositmaterialien werden beispielsweise unter den Handelsbezeichnungen bzw. - marken Corian®, Marlan ®, Noblan®, Rauvisio® oder Staron® vertrieben.

Es wurde erwähnt, dass das Kompositmaterial bei hinreichendem Eintrag bzw. Einwirken thermischer Energie reversibel thermisch um- bzw. verformbar ist. Mithin lässt sich das Kompositmaterial und somit auch ein aus einem solchen gebildetes oder ein solches umfassendes Gestellelement durch Eintrag thermischer Energie erweichen und in dem erweichten Zustand beliebig um- bzw. verformen. Dieser Vorgang lässt sich beliebig oft wiederholen und ist somit reversibel. Das Kompositmaterial weist sonach eine materialspezifische, d. h. insbesondere von der chemischen wie auch anteiligen Zusammensetzung abhängige, Erweichungs- bzw. Verformungstemperatur auf, bei Erreichen welcher sich das Kompositmaterial um- bzw. verformen lässt. Unterhalb der Erweichungs- bzw. Verformungstemperatur lässt sich das Kompositmaterial nicht um- bzw. verformen. Die Um- bzw. Verformung des Kompositmaterials kann beispielsweise über Biegeprozesse erfolgen.

Die Erweichungs- bzw. Verformungstemperatur ist wesentlich durch die organische Materialkomponente(n) und insoweit herstellbar- bzw. zusammensetzungsabhängig bestimmt. Typischerweise liegt die Erweichungs- bzw. Verformungstemperatur in einem Bereich zwischen 70°C und 160°C. Da die Erweichungs- bzw. Verformungstemperatur, wie erwähnt, typischerweise materialspezifisch variiert, kann sie gegebenenfalls auch unterhalb 100°C oder oberhalb 160°C liegen. Die Erweichungs- bzw. Verformungstemperatur ist typischerweise so gewählt, dass ein entsprechendes Gestellelement frühestens bei Temperaturen oberhalb 70°C zu erweichen beginnt. Selbstverständlich können auch in diesem Zusammenhang Ausnahmen gegeben sein.

Ein entsprechendes Gestellelement kann, wie erwähnt, zumindest abschnittsweise oder vollständig aus einem entsprechenden Kompositmaterial gebildet sein. Ausführungsformen, in welchen ein Gestellelement ein entsprechendes Kompositmaterial umfasst, können z. B. durch Aufbringen des Kompositmaterials auf ein Trägermaterial realisiert sein. Mithin ist es möglich, dass das wenigstens eine Kompositmaterial auf wenigstens einem Trägermaterial angeordnet oder ausgebildet ist. Das Gestellelement weist in dieser Ausführungsform einen mehrlagigen bzw. mehrschichtigen, d. h. einen wenigstens zwei unterschiedliche Lagen oder Schichten umfassenden, Aufbau auf. Wenigstens eine Lage oder Schicht besteht aus einem Kompositmaterial, wenigstens eine Lage oder Schicht besteht aus einem Trägermaterial. Entsprechende Lagen bzw. Schichten liegen typischerweise flächig, insbesondere vollflächig, aufeinander auf und sind zumindest abschnittsweise, insbesondere vollständig, stabil bzw. unverlierbar miteinander verbunden. Die geometrisch-konstruktive Gestaltung eines mehrlagigen bzw. mehrschichtigen Gestellelements wird sowohl durch entsprechende Lagen oder Schichten aus dem mineralischen Kompositmaterial als auch durch entsprechende Lagen oder Schichten aus dem Trägermaterial bestimmt. Die geometrischen Abmessungen entsprechender Lagen oder Schichten aus dem mineralischen Kompositmaterial als auch entsprechender Lagen oder Schichten aus dem Trägermaterial können im Hinblick auf eine Endkontur eines jeweiligen Gestellelements konturnah (vor)geformt sein. Das Trägermaterial ist neben dem Kompositmaterial sonach struktureller Bestandteil eines jeweiligen Gestellelements. Das Trägermaterial oder das Kompositmaterial kann dabei eine Sichtseite oder eine Nichtsichtseite des Gestellelements bilden. In allen Fällen können entsprechende Trägermaterialien als Auf- oder Unterlage für entsprechende Kompositmaterialien bezeichnet bzw. erachtet werden.

Die beschriebene stabile unverlierbare Verbindung zwischen dem Trägermaterial und dem Kompositmaterial kann über verschiedene Befestigungs- bzw. Verbindungsarten erfolgen. Prinzipiell kommen sämtliche form- und/oder kraft- und/oder stoffschlüssige Befestigungs- bzw. Verbindungsarten in Betracht. Das Kompositmaterial kann sonach form- und/oder kraft- und/oder stoffschlüssig mit dem Trägermaterial verbunden respektive form- und/oder kraft- und/oder stoffschlüssig auf dem Trägermaterial befestigt (angeordnet) sein. Lediglich beispielhaft und nicht abschließend wird auf Kaschieren, Kleben, Schweißen, Prägen, insbesondere Heißprägen, Klemmen, Nageln, Nieten, Rasten, Schrauben verwiesen. Praktikabel sind Klebeverbindungen, da hierüber eine Vielzahl unterschiedlicher Materialpaarungen und somit eine Vielzahl unterschiedlicher Trägermaterialien und Kompositmaterialien stabil und auf fügungstechnisch vergleichsweise einfache, gleichwohl zuverlässige Weise, insbesondere (voll)flächig, miteinander verbunden werden können. Zwischen dem Trägermaterial und dem Kompositmaterial kann zumindest abschnittsweise ein Haftvermittler, z. B. in Form einer auf dem Trägermaterial oder dem Kompositmaterial angeordneten oder ausgebildeten Klebeschicht, vorhanden sein, um eine stabile unverlierbare Verbindung zwischen dem Trägermaterial und dem Kompositmaterial zu fördern oder - etwa in dem Falle chemisch nicht verträglicher Trägermaterialien und Kompositmaterialien - gegebenenfalls überhaupt erst ausbilden zu können.

Ein Trägermaterial kann z. B. aus Gründen der optischen Anmutung bzw. des Designs eines entsprechenden Gestellelements und/oder aus strukturellen Gründen, d. h. z. B. um dem Gestellelement eine besondere mechanische Stabilität zu verleihen, vorgesehen werden. Entsprechend ist die Auswahl an möglichen Materialien bzw. Materialstrukturen entsprechender Trägermaterialien nahezu endlos. Ein Trägermaterial kann z. B. aus einem Glas-, einem Gesteins-, einem Metall-, einem Keramik-, einem Kunststoff-, oder einem Holzmaterial, bevorzugt einem Massiv- oder Vollholzmaterial, gebildet sein oder wenigstens eines der genannten Materialien umfassen. Mischungen bzw. Verbindungen unterschiedlicher Materialien bzw. Materialgruppen sind ohne weiteres möglich. Ein Trägermaterial kann z. B. aus einer Metall- und einer Holz- und/oder Kunststoffkomponente gebildet sein bzw. eine Metall- und eine Holz- und/oder Kunststoffkomponente umfassen. Ein Trägermaterial kann auch aus einem Verbundmaterial, wie z. B. einem Laminat- oder Schichtmaterial, z. B. Hochdruckschichtpressmaterial (HPL) oder Baustoffschichtmaterial, gebildet sein oder wenigstens ein solches umfassen.

Als Holz- bzw. Vollholzmaterialien kommen allgemein sowohl porige als auch nicht porige Hart- und/oder Weichhölzer in Betracht. Lediglich beispielhaft wird auf Holz- bzw. Vollholzmaterialien basierend auf Apfelbaum, Ahorn, Birke, Buche, Eibe, Eiche, Esche, Kastanie, Mahagoni, Nussbaum, Kiefer, Kirschbaum, Pinie, Olive oder Zwetschgenbaum verwiesen. Selbstverständlich können unterschiedliche Holz- bzw. Vollholzmaterialien vorgesehen werden.

Um die mechanischen Eigenschaften, z. B. die Härte, und/oder die optischen Eigenschaften, z. B. die Farbgebung, und/oder die Haltbarkeit bzw. Widerstandsfähigkeit eines Holz- bzw. Vollholzmaterials gezielt zu beeinflussen, kann ein solches zumindest abschnittsweise mit wenigstens einer Imprägnierung imprägniert sein. Eine solche Imprägnierung basiert typischerweise auf einem oder mehreren Kunststoffen bzw. Kunststoffharzen. Eine entsprechende Imprägnierung kann einen Farbstoff enthalten, was dem Holz- bzw. Vollholzmaterial eine bestimmte Färbung verleihen kann. Ein konkretes Beispiel für eine geeignete Imprägnierung ist eine Mischung von mono- oder polyfunktionellen Kunststoffharzen, insbesondere Methacrylat- und Acrylatmonomeren. Durch eine entsprechende Imprägnierung kann zudem die Hautverträglichkeit gezielt verbessert werden.

Das oder wenigstens ein Gestellelement kann, wie erwähnt, aus mehreren miteinander unter Ausbildung des (jeweiligen) Gestellelements verbindbaren oder verbundenen Gestellelementabschnitten gebildet sein. Dabei ist wenigstens ein Gestellelementabschnitt zumindest abschnittsweise aus dem Kompositmaterial gebildet oder umfasst ein solches Kompositmaterial. Ein Gestellelement kann sonach in mehrere Gestellelementabschnitte unterteilt und somit mehrteilig ausgebildet sein. Die Unterteilung ist grundsätzlich frei wählbar, so dass lediglich beispielhaft auf Unterteilungen in Längs- und/oder Querrichtung eines jeweiligen Gestellelements verwiesen wird.

Selbstverständlich sind jeweilige ein jeweiliges Gestellelement bildende Gestellelementabschnitte aneinander befestigt bzw. fest miteinander verbunden. In diesem Zusammenhang ist auf die Ausführungen zu möglichen Verbindungsarten jeweiliger mineralischer Kompositmaterialien auf jeweiligen Trägermaterialien zu verweisen, welche in diesem Zusammenhang analog gelten. Entsprechende ein Gestellelement bildende Gestellelementabschnitte können sonach form- und/oder kraft- und/oder stoffschlüssig miteinander verbunden sein. Praktikabel ist auch hier insbesondere Kleben bzw. Leimen, da hierüber eine Vielzahl unterschiedlicher Materialpaarungen und somit eine Vielzahl materialmäßig unterschiedlicher Gestellelementabschnitte stabil und auf fügungstechnisch vergleichsweise einfache, gleichwohl zuverlässige Weise miteinander verbunden werden können.

Durch die durch mehrere Gestellelementabschnitte gebildete mehrteilige Ausbildung eines Gestellelements können bestimmte Materialeigenschaften unterschiedlicher Materialien vermittels material- oder materialeigenschaftsmäßig unterschiedlicher Gestellelementabschnitte in einem einzigen Gestellelement vereint werden. Derart können bestimmte Bereiche eines Gestellelements gezielt mit einem bestimmten Eigenschaftsprofil, d. h. z. B. mit einer bestimmten mechanischen Stabilität, einer bestimmten Oberfläche, etc., ausgebildet werden. Selbstverständlich können material-oder materialeigenschaftsmäßig unterschiedliche Gestellelementabschnitte auch unter haptischen und/oder optischen Aspekten interessant sein.

Auch einzelne Gestellelementabschnitte können aus unterschiedlichen Materialien gebildet sein. Hinsichtlich möglicher Materialien zur Ausbildung entsprechender Gestellelementabschnitte gelten die Ausführungen im Zusammenhang mit den möglichen Materialien bzw. Materialgruppen zur Ausbildung entsprechender Trägermaterialien analog. Mithin können entsprechende Gestellelementabschnitte auch aus Holzmaterialien, insbesondere Massiv- bzw. Vollholzmaterialien, ausgebildet sein oder solche umfassen. Wie erwähnt, ist jedoch wenigstens ein Gestellelementabschnitt aus einem entsprechenden Kompositmaterial gebildet oder umfasst wenigstens ein solches.

Auf einem entsprechenden Kompositmaterial kann zumindest abschnittsweise wenigstens ein, insbesondere pflanzliches oder tierisches, Dekormaterial angeordnet oder ausgebildet sein. Analog dazu kann, soweit vorhanden, auf einem entsprechenden Trägermaterial zusätzlich zumindest abschnittsweise wenigstens ein, insbesondere pflanzliches oder tierisches, Dekormaterial angeordnet oder ausgebildet sein. Ein Dekormaterial unterscheidet sich von einem gegebenenfalls ebenso vorhandenen Trägermaterial in der Regel durch seine strukturellen Eigenschaften. Das Dekormaterial kann z. B. in mechanischer Hinsicht weniger stabil als das Trägermaterial sein. Geeignete Dekormaterialien sind z. B. Beschichtungen, Folien, Lackierungen, Textilien, synthetische, pflanzliche oder tierische, kurz natürliche, Materialien, wie z. B. frische oder getrocknete Pflanzen bzw. Pflanzenbestandteile, wie z. B. Blumen, Blüten, Blätter, Gräser bzw. Heu, Rinden (z. B. eines Baums), Tierbestandteile, wie z. B. Gewebe, insbesondere Hautgewebe, beispielsweise Leder, oder Horngewebe. Ein Dekormaterial kann z. B. auch durch einen Zellstoff, wie z. B. Papier, oder ein Metall, d. h. insbesondere eine metallische Beschichtung bzw. Schicht, beispielsweise in Form von Gold bzw. Blattgold, Silber, Platin, etc., oder eine Keramik gebildet sein.

Entsprechende Dekormaterialien sind einerseits unter optischen Gesichtspunkten interessant. Andererseits können Dekormaterialien, d. h. z. B. Textilien oder entsprechende synthetische, pflanzliche oder tierische Materialen, gegebenenfalls Flächenmaterialien, auch eine bestimmte Haptik bzw. Griffigkeit oder einen Schutz der Oberfläche gegenüber äußeren, d. h. z. B. klimatischen und/oder mechanischen, Einflüssen ermöglichen. Die Dekormaterialien können insofern auch als Funktionsmaterialen bezeichnet bzw. erachtet werden.

Die Erfindung betrifft ferner eine Brille, umfassend wenigstens ein wie beschriebenes Gestell für eine Brille (Brillengestell) und/oder ein Monokel, umfassend wenigstens ein wie beschriebenes Gestell für ein Monokel (Monokelgestell) und/oder ein Lorgnon, umfassend wenigstens ein wie beschriebenes Gestell für ein Lorgnon (Lorgnongestell). Sowohl hinsichtlich einer entsprechenden Brille als auch hinsichtlich eines entsprechenden Monokels als hinsichtlich eines entsprechenden Lorgnons gelten sämtliche Ausführungen im Zusammenhang mit dem Gestell analog. Entsprechende Brillen, Monokel oder Lorgnons können als Sehhilfen und/oder als Schutzmaßnahmen für das Auge, z. B. gegenüber Sonnenstrahlung, und/oder als modische Accessoires zu rein modischen Zwecken dienen.

Die Erfindung ist anhand von Ausführungsbeispielen in den Zeichnungsfiguren näher erläutert. Dabei zeigen:

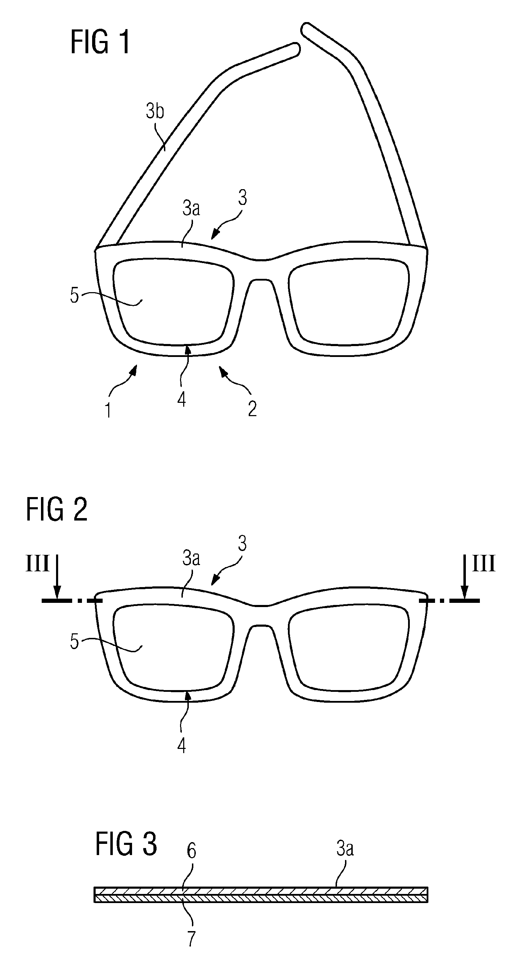

- Fig. 1 - 7: je eine Prinzipdarstellung eines oder mehrerer Gestellelemente eines Gestells gemäß einem Ausführungsbeispiel der Erfindung.

Fig. 1 zeigt eine Prinzipdarstellung eines Ausführungsbeispiels eines Gestells 1. Bei dem Gestell 1 handelt es sich um ein Gestell für eine Brille 2. Das Gestell 1 umfasst mehrere Gestellelemente 3, 3a, 3b, nämlich ein Gestellelement 3 in Form eines Gestellgrundkörpers 3a mit Aufnahmemöglichkeiten 4 für optische Elemente 5, d. h. Brillengläser, und zweier Gestellelemente in Form eines Gestellbügels 3b. Die Gestellbügel 3b können in an sich bekannter Weise über nicht näher gezeigte scharnierartige Einrichtungen, wie z. B. Schwenkscharniereinrichtungen, beweglich, d. h. schwenkbeweglich, an dem Gestellgrundkörper 3a angeordnet sein.

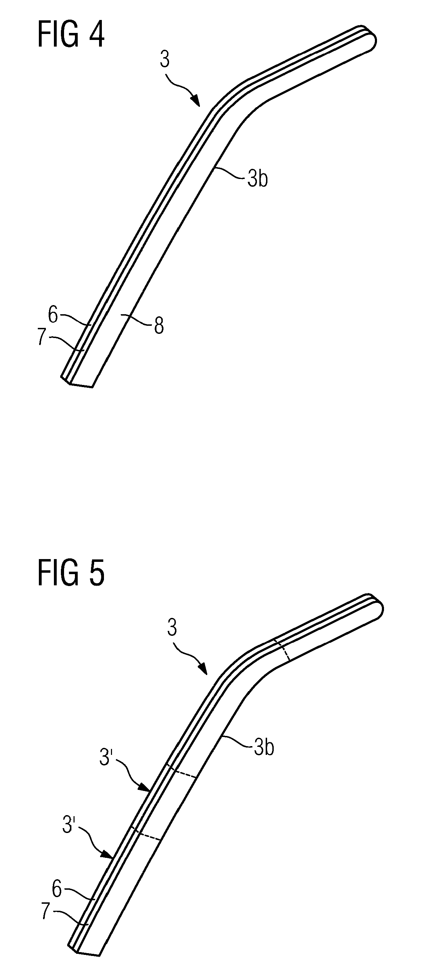

Ein Ausführungsbeispiel eines Gestellgrundkörpers 3a ist in Fig. 2 in einer Vorderansicht und in Fig. 3 in einer entlang der in Fig. 2 gezeigten Schnittlinien III - III geschnittenen Schnittansicht dargestellt. Ausführungsbeispiele entsprechender Gestellbügel 3b sind in den Fig. 4, 5 in perspektivischen Ansichten dargestellt.

Ein Gestellelement 3 oder mehrere der Gestellelemente 3 des Gestells 1 sind zumindest abschnittsweise oder vollständig aus einem besonderen Material gebildet oder umfassen (neben anderen Materialien) wenigstens ein solches besonderes Material. Bei dem besonderen Material handelt es sich um ein mineralisches Kompositmaterial. Das mineralische Kompositmaterial (im Weiteren abgekürzt als Kompositmaterial bezeichnet) besteht (im Wesentlichen) aus zwei unterschiedlichen Materialkomponenten. Eine erste Materialkomponente ist eine mineralische Materialkomponente. Eine zweite Materialkomponente ist eine organische Materialkomponente.

Die mineralische Materialkomponente ist oder umfasst eine mineralische Hydroxidverbindung. Bei der mineralischen Hydroxidverbindung handelt es sich typischerweise um Aluminium(tri)hydroxid (Al(OH)₃). Die organische Materialkomponente ist durch ein thermoplastisches Kunststoffmaterial gebildet oder umfasst wenigstens ein solches. Bei dem thermoplastischen Kunststoffmaterial handelt es sich typischerweise um ein (thermoplastisches) Acrylmaterial, bevorzugt Polymethylmetacrylat (PMMA).

Die organische Materialkomponente kann eine Art Matrix für die sonach als Füllmaterial bzw. Füllstoff zu bezeichnende bzw. zu erachtende mineralische Materialkomponente bilden. Die mineralische Materialkomponente kann entsprechend als bzw. im Sinne eines Füllmaterial(s) bzw. Füllstoff(s) in der eine Art Matrix bildenden organischen Materialkomponente verteilt sein.

Die Zusammensetzung des Kompositmaterials enthält anteilig mehr von der mineralischen Materialkomponente als von der organischen Materialkomponente. Konkret enthält die Zusammensetzung des Kompositmaterials (ca.) zwei Drittel der mineralischen Materialkomponente und (ca.) ein Drittel der organischen Materialkomponente.

Das Kompositmaterial ist bei hinreichendem Eintrag bzw. Einwirken thermischer Energie thermisch um- bzw. verformbar. Mithin lässt sich das Kompositmaterial und somit auch ein aus einem solchen gebildetes oder ein solches umfassendes Gestellelement 3 durch Eintrag thermischer Energie erweichen und in dem erweichten Zustand beliebig um- bzw. verformen. Dieser Vorgang lässt sich beliebig oft wiederholen und ist somit reversibel. Das Kompositmaterial weist eine materialspezifische, d. h. insbesondere von der chemischen wie auch anteiligen Zusammensetzung abhängige, Erweichungs- bzw. Verformungstemperatur auf, bei Erreichen welcher sich das Kompositmaterial um- bzw. verformen lässt. Unterhalb der Erweichungs- bzw. Verformungstemperatur lässt sich das Kompositmaterial nicht um- bzw. verformen. Die Erweichungs- bzw. Verformungstemperatur liegt typischerweise in einem Bereich zwischen 100°C und 160°C. Das Gestellelement 3 lässt sich sonach schnell und einfach an individuell unterschiedliche anatomische Gegebenheiten, insbesondere die Kopfform, eines Trägers anpassen.

Anhand der in Fig. 3 gezeigten Schnittansicht durch den in Fig. 2 gezeigten Gestellgrundkörper 3a wie auch anhand der perspektivischen Ansicht des in Fig. 4 gezeigten Gestellbügels 3b ist zu erkennen, dass das Kompositmaterial auf einem Trägermaterial aufgebracht, d. h. angeordnet oder ausgebildet, sein kann. Ein Gestellelement 3 kann sonach durch ein auf einem Trägermaterial aufgebrachtes Kompositmaterial gebildet sein. Das Gestellelement 3 weist entsprechend einen mehrlagigen bzw. mehrschichtigen Aufbau auf. Wenigstens eine Lage 6 oder Schicht besteht aus dem Kompositmaterial, wenigstens eine Lage 7 oder Schicht besteht aus dem Trägermaterial. Entsprechende Lagen 6, 7 bzw. Schichten liegen in den Ausführungsbeispielen gemäß Fig. 3, 4 vollflächig aufeinander auf und sind vollflächig stabil bzw. unverlierbar miteinander verbunden. Die Verbindung der Lagen 6, 7 bzw. Schichten erfolgt in den Ausführungsbeispielen gemäß Fig. 3, 4 über Verkleben. Prinzipiell kommen jedoch sämtliche form- und/oder kraft- und/oder stoffschlüssige Verbindungsarten in Betracht.

Ein Trägermaterial kann aus Gründen der optischen Anmutung bzw. des Designs eines Gestellelements 3 und/oder aus strukturellen Gründen, d. h. z. B. um einem Gestellelement 3 eine besondere mechanische Stabilität zu verleihen, vorgesehen werden. Entsprechend ist die Auswahl an möglichen Materialien bzw. Materialstrukturen entsprechender Trägermaterialien nahezu endlos. Ein Trägermaterial kann z. B. aus einem Glas-, einem Metall-, einem Keramik-, einem Kunststoff-, einem Holzmaterial, bevorzugt einem Massiv- oder Vollholzmaterial, oder einem Verbundmaterial, wie z. B. einem Laminat- oder Schichtmaterial, z. B. Hochdruckschichtpressmaterial (HPL) oder Baustoffschichtmaterial, gebildet sein oder wenigstens eines der genannten Materialien umfassen. Mischungen unterschiedlicher Materialien bzw. Materialgruppen sind ohne weiteres möglich.

Als Holz- bzw. Vollholzmaterialien kommen sowohl porige als auch nicht porige Hart- und/oder Weichhölzer in Betracht. Beispielhaft wird auf Holz- bzw. Vollholzmaterialien basierend auf Apfelbaum, Ahorn, Birke, Buche, Eibe, Eiche, Esche, Kastanie, Mahagoni, Nussbaum, Kiefer, Kirschbaum, Pinie, Olive oder Zwetschgenbaum verwiesen. Selbstverständlich können unterschiedliche Holz- bzw. Vollholzmaterialien vorgesehen werden.

Um die mechanischen Eigenschaften, z. B. die Härte, und/oder die optischen Eigenschaften, z. B. die Farbgebung, und/oder die Haltbarkeit bzw. Widerstandsfähigkeit eines Holz- bzw. Vollholzmaterials gezielt zu beeinflussen, kann ein solches mit einer Imprägnierung imprägniert sein. Eine solche Imprägnierung basiert typischerweise auf einem oder mehreren Kunststoffen bzw. Kunststoffharzen und kann einen Farbstoff enthalten, was dem Holz- bzw. Vollholzmaterial eine bestimmte Färbung verleihen kann. Konkret kann es sich bei der Imprägnierung um eine Mischung von mono- oder polyfunktionellen Kunststoffharzen, insbesondere Methacrylat- und Acrylatmonomeren, handeln.

Anhand des in Fig. 5 gezeigten Ausführungsbeispiels ist ersichtlich, dass ein Gestellelement 3, hier ein Gestellbügel 3b, aus mehreren miteinander unter Ausbildung des Gestellelements 3 verbindbaren bzw. verbundenen Gestellelementabschnitten 3' gebildet sein kann. Dabei ist wenigstens ein Gestellelementabschnitt 3' zumindest abschnittsweise aus dem Kompositmaterial gebildet oder umfasst ein solches Kompositmaterial. Ein Gestellelement 3 kann sonach in mehrere Gestellelementabschnitte 3' unterteilt und somit mehrteilig ausgebildet sein. Die Unterteilung ist grundsätzlich frei wählbar, so dass neben der in Fig. 5 beispielhaft gezeigten Unterteilung des Gestellelements 3 in Längsrichtung - ersichtlich sind mehrere entsprechende Gestellelementabschnitte 3' in Längsrichtung aneinandergesetzt - auch Unterteilungen in Querrichtung - ähnlich dem Ausführungsbeispiel gemäß Fig. 4, wobei anstelle entsprechender Lagen 6, 7 entsprechende Gestellelementabschnitte 3' vorgesehen wären - eines Gestellelements 3 möglich sind.

Die Verbindung jeweiliger Gestellelementabschnitte 3' kann z. B. über Verkleben bzw. Verleimen erfolgen. Dies gilt insbesondere für aus Holz- bzw. Vollholzmaterialien gebildete Gestellelementabschnitte 3'.Prinzipiell kommen jedoch auch hier sämtliche form- und/oder kraft- und/oder stoffschlüssige Verbindungsarten in Betracht.

Unter nochmaliger Bezugnahme auf das Ausführungsbeispiel gemäß Fig. 4 soll erläutert werden, dass auf dem Kompositmaterial und/oder dem Trägermaterial zumindest abschnittsweise wenigstens eine Lage 8 oder Schicht eines synthetischen, pflanzlichen oder tierischen Dekormaterials angeordnet oder ausgebildet sein kann. In dem in Fig. 4 gezeigten Ausführungsbeispiel ist eine Lage 8 eines Dekormaterials auf der Lage des Trägermaterials 7 aufgebracht. Die Verbindung der Lagen 7, 8 erfolgt in dem Ausführungsbeispiel gemäß Fig. 4 über Verkleben. Prinzipiell kommen jedoch auch hier sämtliche form- und/oder kraft- und/oder stoffschlüssige Verbindungsarten in Betracht.

Das Dekormaterial unterscheidet sich von dem bzw. allgemein einem Trägermaterial in der Regel durch seine strukturellen Eigenschaften. Das Dekormaterial kann z. B. in mechanischer Hinsicht weniger stabil als das Trägermaterial sein. Geeignete Dekormaterialien sind z. B. Beschichtungen, Folien, Lackierungen, Textilien, synthetische, pflanzliche oder tierische, kurz natürliche, Materialien, wie z. B. frische oder getrocknete Pflanzen bzw. Pflanzenbestandteile, wie z. B. Blumen, Blüten, Blätter, Gräser bzw. Heu, Rinden (z. B. eines Baums), Tierbestandteile, wie z. B. Gewebe, insbesondere Hautgewebe, beispielsweise Leder, oder Horngewebe. Ein Dekormaterial kann z. B. auch durch einen Zellstoff, wie z. B. Papier, oder ein Metall, d. h. insbesondere eine metallische Beschichtung bzw. Schicht, beispielsweise in Form von Gold bzw. Blattgold, Silber, Platin, etc., oder eine Keramik gebildet sein.

Dekormaterialien sind einerseits unter optischen Gesichtspunkten interessant. Andererseits können Dekormaterialien, d. h. z. B. Textilien oder entsprechende synthetische, pflanzliche oder tierische Materialien, gegebenenfalls Flächenmaterialien, auch eine bestimmte Haptik bzw. Griffigkeit oder einen Schutz der Oberfläche gegenüber äußeren, d. h. z. B. klimatischen und/oder mechanischen, Einflüssen ermöglichen. Die Dekormaterialien können insofern auch als Funktionsmaterialen bezeichnet bzw. erachtet werden.

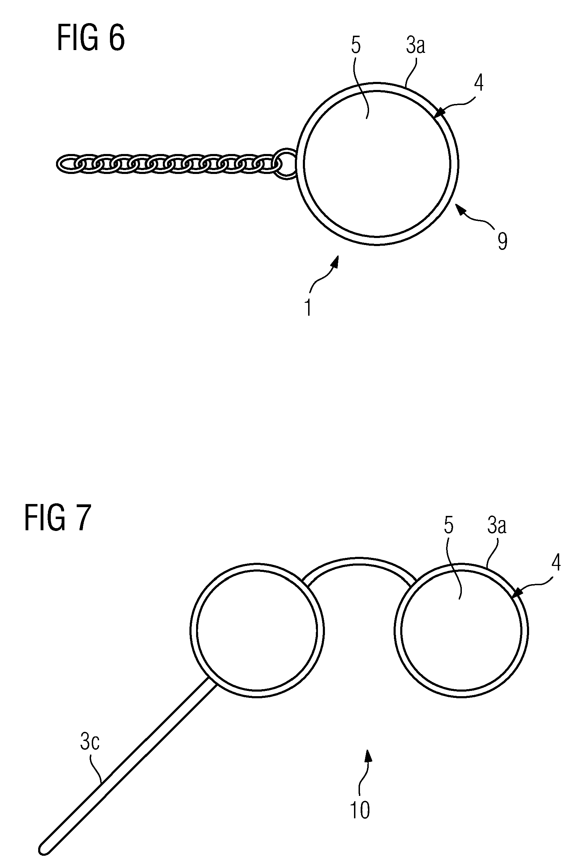

Fig. 6 zeigt eine Prinzipdarstellung eines weiteren Ausführungsbeispiels eines Gestells 1. Bei dem Gestell 1 handelt es sich um ein Gestell 1 für ein Monokel 9. Das Gestell 1 umfasst ein Gestellelement 3, 3a, nämlich ein Gestellelement 3 in Form eines Gestellgrundkörpers 3a mit einer Aufnahmemöglichkeit 4 für ein optisches Element 5, d. h. ein Monokelglas. An dem Gestellgrundkörper 3a kann - wie die Fig. zeigt - eine nicht näher bezeichnete Kette befestigt sein.

Fig. 7 zeigt eine Prinzipdarstellung eines weiteren Ausführungsbeispiels eines Gestells 1. Bei dem Gestell 1 handelt es sich um ein Gestell für ein Lorgnon 10. Das Gestell 1 umfasst mehrere Gestellelemente 3, 3a, 3c nämlich ein Gestellelement 3 in Form eines Gestellgrundkörpers 3a mit Aufnahmemöglichkeiten 4 für optische Elemente 5, d. h. Lorgnongläser, und ein Gestellelement 3 in Form eines an dem Gestellgrundkörper 3a angeordneten Gestellgriffs 3c. Der Gestellgriff 3c kann einstückig mit dem Gestellgrundkörper 3a ausgebildet oder als separates Bauteil unmittelbar oder mittelbar an diesem befestigt angeordnet sein.

Für die in den Fig. 6, 7 gezeigten Ausführungsbeispiele entsprechender Gestelle 1 gelten sämtliche Ausführungen im Zusammenhang mit den in den Fig. 1 - 5 gezeigten Ausführungsbeispielen analog. Auch bei den in den Fig. 6, 7 gezeigten Gestellen 1 ist wenigstens ein Gestellelement 3, 3a, 3c aus einem entsprechenden Kompositmaterial gebildet oder umfasst wenigstens ein solches. Die Gestellelemente 3, 3a, 3c können sonach ebenso entsprechende Träger- bzw. Dekormaterialien umfassen und/oder in entsprechende Gestellelementabschnitte 3' unterteilt sein.

### BEZUGSZEICHENLISTE

- 1: Gestell
- 2: Brille
- 3: Gestellelement
- 3a: Gestellgrundkörper
- 3b: Gestellbügel
- 3c: Gestellgriff
- 3': Gestellelementabschnitt
- 4: Aufnahmemöglichkeit
- 5: optisches Element
- 6: Lage
- 7: Lage
- 8: Lage
- 9: Monokel
- 10: Lorgnon

## Patentansprüche

1. Gestell (1) für eine Brille (2) oder ein Monokel (9) oder ein Lorgnon (10), umfassend wenigstens ein Gestellelement (3), **dadurch gekennzeichnet, dass** das wenigstens eine Gestellelement (3) zumindest abschnittsweise aus wenigstens einem mineralischen Kompositmaterial, umfassend wenigstens eine mineralische Materialkomponente und wenigstens eine, insbesondere harzartige, organische Materialkomponente gebildet ist oder wenigstens ein solches mineralisches Kompositmaterial umfasst.

2. Gestell nach Anspruch 1, **dadurch gekennzeichnet, dass** die wenigstens eine mineralische Materialkomponente wenigstens eine mineralische Hydroxidverbindung, insbesondere Aluminiumhydroxid, ist oder wenigstens eine solche umfasst.

3. Gestell nach Anspruch 1 oder 2, **dadurch gekennzeichnet, dass** die wenigstens eine organische Materialkomponente ein Kunststoffmaterial, insbesondere ein Acrylmaterial, bevorzugt Polymethylmetacrylat, oder ein Polyestermaterial, ist oder wenigstens ein solches umfasst.

4. Gestell nach einem der vorhergehenden Ansprüche, **dadurch gekennzeichnet, dass** die wenigstens eine organische Materialkomponente eine Matrix bildet, in welcher die mineralische Materialkomponente verteilt enthalten ist.

5. Gestell nach einem der vorhergehenden Ansprüche, **dadurch gekennzeichnet, dass** die Zusammensetzung des wenigstens einen mineralischen Kompositmaterials anteilig mehr von der mineralischen Materialkomponente als von der organischen Materialkomponente, insbesondere zwei Drittel der mineralischen Materialkomponente und ein Drittel der organischen Materialkomponente, enthält.

6. Gestell nach einem der vorhergehenden Ansprüche, **dadurch gekennzeichnet, dass** das wenigstens eine mineralische Kompositmaterial oberhalb einer materialspezifischen Grenztemperatur reversibel verformbar ist.

7. Gestell nach einem der vorhergehenden Ansprüche, **dadurch gekennzeichnet, dass** das oder wenigstens ein Gestellelement (3) aus mehreren miteinander unter Ausbildung des Gestellelements (3) verbundenen Gestellelementabschnitten (3') gebildet ist, wobei wenigstens ein Gestellelementabschnitt (3') zumindest abschnittsweise aus dem mineralischen Kompositmaterial gebildet ist.

8. Gestell nach einem der vorhergehenden Ansprüche, **dadurch gekennzeichnet, dass** das wenigstens eine mineralische Kompositmaterial zumindest abschnittsweise auf wenigstens einem Trägermaterial angeordnet oder ausgebildet ist.

9. Gestell nach Anspruch 8, **dadurch gekennzeichnet, dass** das wenigstens eine mineralische Kompositmaterial auf dem Trägermaterial form- und/oder kraft-und/oder stoffschlüssig befestigt angeordnet ist.

10. Gestell nach Anspruch 8 oder 9, **dadurch gekennzeichnet, dass** das wenigstens eine Trägermaterial ein Glasmaterial, ein Metallmaterial, ein Keramikmaterial, ein Kunststoffmaterial, ein Holzmaterial, bevorzugt ein Massiv- oder Vollholzmaterial, ein insbesondere mineralisches, Gesteinsmaterial ist oder wenigstens ein solches umfasst.

11. Gestell nach einem der vorhergehenden Ansprüche, **dadurch gekennzeichnet, dass** auf dem mineralischen Kompositmaterial zumindest abschnittsweise wenigstens ein, insbesondere pflanzliches oder tierisches, Dekormaterial angeordnet oder ausgebildet ist und/oder dass auf dem oder einem Trägermaterial zusätzlich zumindest abschnittsweise wenigstens ein, insbesondere pflanzliches oder tierisches, Dekormaterial angeordnet oder ausgebildet ist.

12. Gestell nach einem der vorhergehenden Ansprüche, **dadurch gekennzeichnet, dass** das oder ein Gestellelement (3) ein Gestellgrundkörper (3a) mit wenigstens einer Aufnahmemöglichkeit (4) für ein optisches Element (5), insbesondere ein Brillenglas oder ein Monokelglas oder ein Lorgnonglas, ist.

13. Gestell nach einem der vorhergehenden Ansprüche, **dadurch gekennzeichnet, dass** das oder ein Gestellelement (3) ein an dem oder einem Gestellgrundkörper (3a) mit wenigstens einer Aufnahmemöglichkeit (4) für ein optisches Element (5), insbesondere ein Brillenglas oder ein Monokelglas oder ein Lorgnonglas, ausgebildeter oder angeordneter Gestellbügel (3a) oder Gestellgriff (3c) ist.

14. Gestellelement nach Anspruch 13, **dadurch gekennzeichnet, dass** der oder ein Gestellbügel (3a) oder der oder ein Gestellgriff (3c) einstückig mit dem Gestellgrundkörper (3a) ausgebildet ist oder als separates Bauteil unmittelbar oder mittelbar an diesem befestigt angeordnet ist.

15. Brille (2), umfassend wenigstens ein Gestell (1) nach einem der vorhergehenden Ansprüche.
